# EUROPEAN PATENT APPLICATION

(11) **EP 1 328 088 A2**
(43) Date of publication of application: **16.07.2003**
(21) Application number: 03250201.5
(22) Date of filing: 14.01.2003
(51) Int. Cl.: H04L 12/46, H04L 12/56

(54) **Virtual local area network interconnection and router interface**

(30) Priority: 15.01.2002 GB 0200838
(71) Applicant: XchangePoint Holdings Ltd, London W1V 9PA (GB)
(72) Inventor: Keith Mitchell, c/o XchangePoint Europe, London WC2E 8 QH (GB)
(74) Representative: Gill, David Alan

(57) **Abstract**

The present invention provides for a communications network configuration for the connection of at least three parties wherein second and third parties are both connected to a first party in a manner wherein connection between the second and third parties is prevented, the network comprising a virtual local area network, the first and second parties defining at least part of a first virtual local area network, and the first and third parties defining at least part of a second separate virtual local area network, wherein the first party includes a physical router interface common to both the first and the second virtual local area networks and configured as a plurality of logical sub-interfaces.

The configuration of the present invention consists of several VLANs each defined between the central party and each of the other parties respectively.

Thus, each such VLAN has two ports as members, i.e. that of the first party and that of the second or third party etc. The first party's aggregate interface is therefore advantageously a member of all of the VLANs serving to form the connection configuration required of the first, second and third parties.

Adoption of the IEEE 802.1q standard has become possible for routers, and indeed other devices attached to each switch, to identify VLAN tags such that such devices can thereby determine which VLAN a particular item of traffic belongs to and advantageously to tag it to that VLAN before it actually enters the switch.

## Description

The present invention relates to a VLAN interconnection configuration.

In conventional Local Area Networks (LANs), the underlying media generally comprises a broadcast-based ethernet fabric which affords any device connected to the LAN the potential for communication with any other device. Any restrictions arising in traffic flow between the various devices are generally the result of dynamic learning within the LAN switches. This effectively serves to reduce traffic so as to direct it away from locations where it is not needed, or will not be required. Even where such restrictions are intended to exist, they are not found to be strictly enforced.

With regard to traditional public peering points which allow for method connectivity of a plurality of parties, the unrestricted characteristics of conventional LANs are often considered an advantage in that they allow for the free-flow of traffic between all of the parties connected to the exchange media and this greatly assists multilateral peering between multiple parties.

However, in some circumstance, for example in internal networks and when considering the traffic required to be sent between Internet Service Providers, the need to restrict traffic flow commonly arises. Such restrictions assist with traffic flow management and also serve to provide for an effective level of security.

In order to implement such traffic control, particularly within internal networks, VLAN technology was devised and has been widely used.

A VLAN is superimposed on a communications network and can generally be defined by a subset of the ports, and connected devices, of a given switched local network. These subsets are defined by each port of subset being configured by means of a listing of each of the VLANs it is associated with. Each VLAN is uniquely identified by a tag, and so each port, and connected device, forming part of any one VLAN, is assigned such a common tag.

When traffic is first placed on the network, it is assigned a tag based on the switch port at which the traffic initially arrives and each switch on the network then serves only to forward this traffic to other ports that have the same tag and are thus part of that VLAN.

Although VLANS were initially implemented by means of proprietary technology, an open standard has now been defined and is identified as IEEE 802.1q.

As mentioned previously, although the ability of any participant at a public peering point to exchange traffic freely with any party can be considered an advantage, it can also, in some circumstances, be considered a potentially severe disadvantage and limitation.

By its very nature, a public peering point can be the focus of security breaches and malfunctions. The most common, and potentially problematic, forms of outages at such public peering points are commonly caused by the mis-configuration, malfunction, or compromise of a router of one participant which serves to place traffic, and sometimes broadcast traffic, onto the exchange media of the network in a manner which can have an adverse effect on the operability of all other parties connected to the network exchange.

Increasingly, participants at a public peering point will only want to exchange communications traffic with a subset of the other parties connected to the peering point. The remainder might often not be trusted due to, for example, an absence of a contractual relationship, or indeed the presence of a competitive relationship. It can also prove difficult to prevent unsolicited traffic from one party entering another party's router at a public exchange. Also it is not unknown for, for example, unpaid-for traffic being default-dumped, or tunneled, across the networks of unwitting participants by third party providers seeking an unfair advantage. The possibility for such activities becomes even more of a concern when the network is provided in an environment in which the interconnect point is used not only for settlement-free peering agreements, but also for the sale of paid-for transit traffic under Service Level Agreement commitments.

An additional issue is the question of confidentiality. Although known LAN switches do not in general route traffic to destinations where the traffic is not required, this cannot be absolutely guaranteed. There is therefore an increasing sensitivity about the privacy of data placed into an Internet environment.

From a comparison with the above, it can be appreciated that the VLAN concept can offer significant advantages both in terms of the quality of service and, quite importantly, the perception of the customer as to how that service is provided. A VLAN is particularly useful is restricting traffic flow to only those parties to the interconnect structure who have a legitimate mutual agreement to send and receive traffic. Attempts to send traffic to a party which is not part of the VLAN will result in the traffic being discarded by that party's switch before being received by the party. Further, it is not possible to wiretap traffic on to a VLAN via a port which is not a member of that VLAN. The adoption of a VLAN configuration has the immediate advantage of limiting the scope, and thus the impact, of any problems merely to the members of that VLAN and not, for example, to the entire customer base of the LAN. As such, the VLAN can serve to contain a potential problem and limit its impact.

Problems and limitations also arise when seeking to employ conventional WAN and point-to-point technology in a manner serving to allow for, for example, a first party to communicate with either the second and third party but without contact between the said second and third parties being possible. The technology concerned for such arrangements is also directed at voice traffic rather than data traffic.

One possible solution to the requirement for such a configuration could be considered to comprise the provision of a first point-to-point dedicated connection between the first and second parties, and a second, quite separate, point to point dedicated connection between the first and third parties. Such a configuration can prove restrictively expensive, and also exhibits limited capacity within the network.

With, for example, arrangement of four parties, the complexity of such an arrangement is disadvantageously increased due to the need to provide three quite separate interfaces at the router of the central party and this also serves to limit the cost-effectiveness of such separate point-to-point configurations.

As another option, there is the possibility of providing a private exchange based upon a VLAN configuration. However, concerns over security and the general robustness of such a private exchange configuration can, in some circumstances, nevertheless remain an issue. Such concerns prove particularly disadvantages insofar as they serve to prejudice parties against a particular configuration and thereby limit its commercial viability.

The present invention therefore seeks to provide for a communications network configuration offering advantages over known such network configurations.

According to the present invention there is provided a communications network configuration for the connection of at least three parties wherein second and third parties are both connected to a first party in a manner wherein connection between the second and third parties is prevented, the network comprising a virtual local area network, the first and second parties defining at least part of a first virtual local area network, and the first and third parties defining at least part of a second separate virtual local area network, wherein the first party includes a router interface common to both the first and the second virtual local area networks and configured as a plurality of sub-interfaces.

The present invention is particularly advantageous in that it comprises a cost-effective means for achieving the above-maintained required connectivity between three parties in a network. It can also prove relatively simple and inexpensive to add additional capacity to the arrangement insofar as the router interface of the first party can be readily configured for communication with, for example third, fourth and successive additional parties.

The invention is particularly advantageous when employed within a Metropolitan Area Network (MAN) since it can lead to a reduction in the costs and overheads of the first party insofar as it is not now necessary to have a presence of all of the sites at which the MAN is present.

Further, the network arrangement can likewise be advantageously re-configured by any of the three parties and this can advantageously enhance the flexibility with which the system can be initially configured and subsequently re-configured.

In particular, the said first party includes a physical router interface configured as a plurality of logical sub interfaces.

Advantageously, the router interface of the first party is configured to provide respective sub-interfaces for each of the second and third parties.

It should be appreciated that the present invention finds particular use in the field of inter service provider connectivity.

The invention can prove particularly advantageous when, for example, connecting Internet Service Providers via switched ethernet LAN technology but in a cost-effective, secure and readily adaptable manner.

Still further, the invention takes advantage of the IEEE 802.1q standard insofar as this standard is now commonly adopted by a variety of switch manufacturers. This advantageously allows for the inter-working of VLANs across multi-vendor switched networks.

It has advantageously been found that, through such wide adoption of the IEEE 802.1q standard, it has become possible for routers, and indeed other devices attached to each switch, to identify VLAN tags such that such devices can thereby determine which VLAN a particular item of traffic belongs to and advantageously to tag it to that VLAN before it actually enters the switch.

Advantageously, the invention exhibits considerable flexibility and thereby can serve to support a variety of VLAN-based services on the same router interface. Such variety of VLAN-based services are advantageously implemented on the appropriately configured sub-interfaces of the routers. This configuration advantageously allows for each physical interface to appear as a plurality of logical interfaces.

A particular advantage derived from this aspect of the invention is that capabilities such a ATM and "frame-relay", previously only available with wide area network technologies, can now be provided by means of a broadcast-based ethernet fabric. Also, such ethernet technology is considered to be more cost-effective than conventional WAN and point-to-point technology.

Further, the flexibility offered by the present invention can allow for the combination of any number of switched services to be accessed through a single port. Also, the configuration offered by the present invention can advantageously reflect common commercial relationships between service providers at interconnected points and advantageously serve to enhance and protect such relationships by offering increased security, confidentiality and robustness.

As examples, the present invention can be provided for connecting a plurality of customers to a single transit provider. As an alternative advantageous configuration, the invention can be provided for connecting a plurality of access providers to a single content/portal provider.

As mentioned above, this can prove far more efficient for the first party than using a separate private interconnect for each other party since all the connections can be concentrated together at the first party, on a high capacity port connected to a single interface on the first party router. As mentioned, the central party's router is advantageously configured with an appropriate number of sub-interfaces having regard to the number of additional parties to which the first party is to connect.

It should be appreciated that the invention exhibits a physical topology that somewhat resembles an exchange, the logic topology is in fact that of multiple separate interconnects.

The invention is thus particularly advantageous in that, in an effective manner, it can employ VLAN technology and, in instead of defining a single VLAN of which all ports of the other parties are members, the configuration of the present invention consists of several VLANs each defined between the central party and each of the other parties respectively.

Thus, each such VLAN has two ports as members, i.e. that of the first party and that of the second or third party etc. The first party's aggregate interface is therefore advantageously a member of all of the VLANs serving to form the connection configuration required of the first, second and third parties.

This therefore ensures that the routers of, for example, the second and third parties cannot see each other, or interact directly, and can only exchange traffic with the first party. This can thus limit, within a particularly cost-effective and flexible manner, the potential for misuse.

According to another aspect of the present invention there is provided a router interface arranged for use at a first of a plurality of first, second and third parties to be connected by way of forming at least part of a VLAN, the interface being configured as a plurality of logical sub-interfaces to allow connection of the said first party to the second and third parties such that connection between the said second and third parties is prevented.

According to yet another aspect of the present invention there is provided a network connection configuration arranged for the access of a plurality of services through a single port at a party to the network, wherein the said party is provided with a router interface configured as a plurality of logical sub-interfaces to provide connectivity respectively to the plurality of services, the connection to each service being by way of discrete VLANs.

The invention advantageously allows for the combination of services at one member of a network in a manner such that the accessibility to one service does not influence, or impair the accessibility to second different service.

It should be appreciated that the concept of the present invention can readily be employed to serve as a virtual private hub for the connection of three parties within a network.

The invention is now described further hereinafter, by way of example only, with reference to the accompanying drawings in which:
Fig. 1 is a schematic diagram of a network configuration according to an embodiment of the present invention; and
Fig. 2 is a schematic diagram illustrating a router configuration of the central party at Fig. 1.

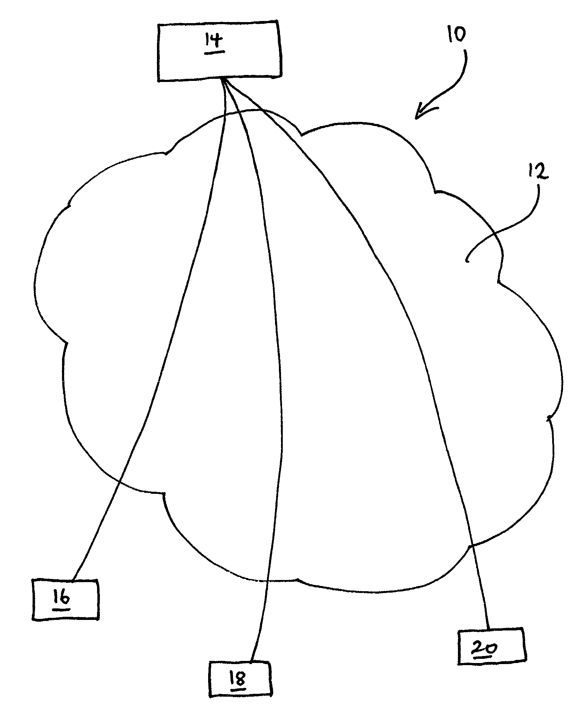

Within this embodiment, there is illustrated in Fig. 1 a virtual private hub 10 which is provided for a central party 14 seeking connection by way of a Metropolitan Area Network 12 to three remote parties 16, 18, 20. It is a specific requirement of the connection between each of the four parties that, while the central party 14 can communicate with each of the three remote parties 16, 18, 20, none of the remote parties 16, 18, 20, can communicate with each other nor in fact are they aware of the existence of each of the others nor their connection to the central party 14.

As discussed previously, the configuration according to the present invention offers advantages as compared with the provision of three separate point-to-point connections between the central party 14 and remote party 16; the central party 14 and remote party 18 and the central party 14 and remote party 20. Also, the present invention proves more preferable than connecting all of the four parties in an open exchange arrangement insofar as the level of security and robustness required can be maintained in a simple, flexible and cost-effective manner.

As noted before, the logical topology is that of three separate point-to-point interconnects and it is from this aspect that the present invention gains its advantages of security and robustness. As one example, the common party 14 can include a Cisco router exhibiting a Cisco IOS IEEE 802.1q support feature with customized sub-interfaces and configured for IP routing.

However, through the adoption of VLAN technology and in accordance with the IEEE 802.1q standard, the configuration illustrated in the figure effectively consists of a plurality of VLANs, one being provided for each remote party 16, 18, 20. As should be appreciated, each such VLAN has two ports as members, for example the common party 14 provided at one end and one of the remote parties, for example 16, at the other end. The interface of the common party 14 will thus be a member of all of those VLANs and this serves to ensure that the routers of each of the remote parties 16, 18 and 20 cannot see each other and so cannot interact directly. The only functionality that is allowed in accordance with the configuration illustrated in the drawing is that the remote parties 16, 18 and 20 can exchange traffic via the central party 14. This advantageously limits the potential for abuse and misuse and, in view of the configuration of the interface on the common party's router, such advantages are achieved in a readily cost-effective and secure manner.

As is noted, the configuration embodying the present invention such as that illustrated in the figure proves far more efficient for the common party 14 than using a single private interconnect per remote user 16, 18, 20 since all the connections are concentrated together on the single high-capacity port connected to a single interface on the central party's router.

The router achieves this through appropriate customization and configuration of sub-interfaces.

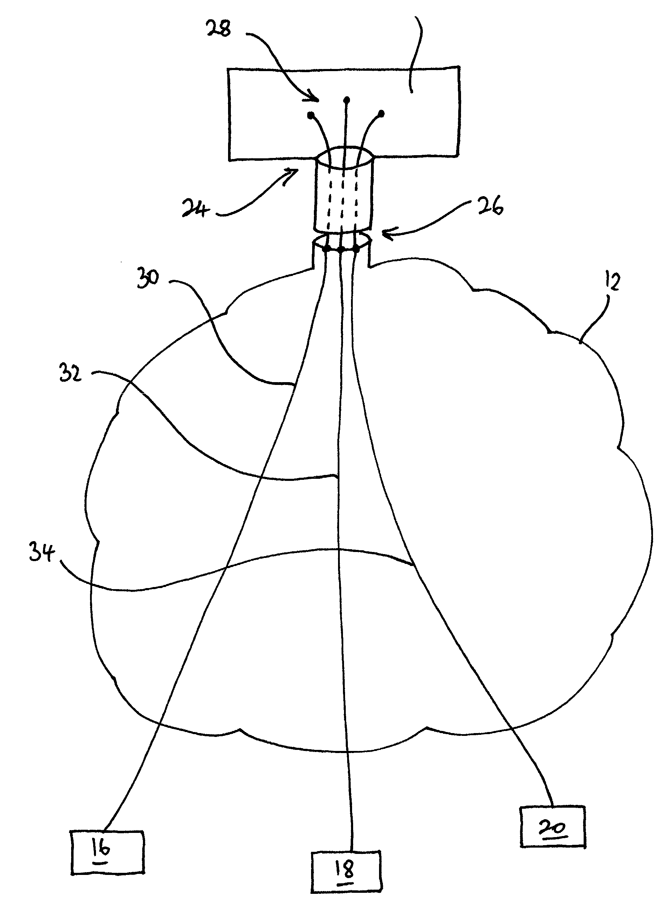

Turning now to Fig. 2, there is illustrated by means of a functional schematic diagram, a router configuration for the common party 14 in accordance with an embodiment of the present invention.

As with Fig. 1, Fig. 2 illustrates the remote parties 16, 18, 20 connected by way of the Metropolitan Area Network 12 to the so-called central party 14. However, in Fig. 2, only a router 22 of the central party 14 is illustrated and which presents a physical interface 24 by means of which connection to an ethernet switch port 26 is achieved for connection to the Metropolitan Area Network 12.

As mentioned previously, the connection through the Metropolitan Area Network 12 of each of the remote parties 16, 18 and 20 is each defined effectively as a separate respective VLAN 30, 32, 34. However, in spite of the single physical interface 24 employed by the router 22, the router 14 is configured such that each of the connections to the remote parties 16, 18 and 20 appears as a respective plurality of logical sub-interfaces 28 at the router 22 of the central party 14.

In this illustrated example, the central party 14 employs an appropriate Cisco router and a sample configuration of such a router 22 at the central party 14 is as follows.

| Central Site Customer |
|---|
| interface FastEthernet1/0 |
| ! |
| interface FastEthernet1/0.1 |
| description Remote Customer A |
| encapsulation dot1Q 100 |
| ip address 192.168.1.1 255.255.255.0 |
| interface FastEthernet1/0.2 |
| description Remote customer B |
| encapsulation dot1Q 101 |
| ip address 192.168.2.1 255.255.255.0 |

| Remote Customer A (untagged environment) |
|---|
| interface FastEthernet0/0 |
| description Connection to central Site |
| ip address 192.168.1.2 255.255.255.0 |

| Remote Customer B (tagged environment) |
|---|
| interface FastEthernet0/0.1 |
| description Connection to central Site |
| encapsulation dot1Q 101 |
| ip address 192.168.2.2 255.255.255.0 |

In accordance with a particular. embodiment of the invention each of the remote parties 16, 18, 20 is provided with a port having a capacity of 100Mb/s, whereas the central party 14 is provided with a 1Gb/s port. This can therefore allow for efficient traffic aggregation and each 1Gb/s port allows for the connection to each multiple of 10 remote parties so as to ensure that non-blocking capacity can be maintained.

According to one particular aspect of the present invention, the connectivity offered in accordance with the invention can readily allow for the combining of services at a network node, such as that of the common party 14 illustrated in the figure. It is quite possible that one party may wish to combine a number of services on the same switched interconnect Metropolitan Area Network port. For example, such customer might wish to enter into a point-to-point connection with another node in the network or a transit provider using the service while also requiring to use one or both of the same two ports for public peering using spare capacity. In another alternative, the customer may wish to use the same port to peer with some peers that are members of one exchange, and others who are not actually reachable via public peering.

The common interface then exhibited by the common port 14 in the figure, could, for example, also be provided by one or more of the remote parties 16, 18 and 20.

Through use of systems and technology complying with the IEEE 802.1q, each party's router is able to identify the VLANs that a party on, for example, the switched Metropolitan Area Network is a member of, as a logically separate two layer network. Such separation advantageously allows for the cost-effective and secure combination of service in a manner such that neither service exhibits an adverse effect on the other.

Insofar as each router can implement VLANs in accordance with the present invention as sub-interfaces, this means that the router binds a separate interface with its own IP address to each VLAN and this therefore correctly simplifies the manner in which each VLAN can be seen as a separate IP sub-network with distinct IP addressing and routing capabilities. The router then simply sees each additional service presented on the same physical interface and switch port as being presented on a separate IP sub-interface.

As mentioned before, the configuration illustrated in the figure can find a variety of uses such as when connecting multiple customers to a single transit provider, or when connecting multiple access providers to a single content/portal provider.

Transit providers generally require the facility to communicate with each other or their customers directly. For security reasons, and reasons of robustness and ease of management/billing, they also prefer to handle all traffic on the local tail to the customers themselves rather than have the customers communicate directly. The configuration of the present invention is advantageously suited to such a requirement. The transit provider can advantageously service customers in any one of the possible locations. The transit provider then need only use one high capacity of router interface to communicate with all their customers and thereby can gain all the other cost-efficiency, and advantages, by means of the present invention.

The present invention can also advantageously be used by a content provider who seeks to out-source dial-up access to their services to a number of Internet Service Providers. The content provider then connects to the access providers at all locations from a single server farm at only one of the said locations. From this, the content provider needs only one high capacity router interface to communicate with all of their access providers, and gains all the other cost-efficience and rapid provisioning advantages of a Metropolitan Area Network service employing the invention as compared with conventual point-to-point wide area network circuit. The content provider will most likely require that each access provider is able to communicate only with them directly. This additional security and robustness offered by the present invention, and which serves to provide such a requirement is well suited to such an application. This is due in part due to the fact that the access providers may in fact be in competition with each other as part of multi-sourcing requirements of the content provider. Additionally, the bulk of the traffic flow is likely to take place between the content provider and each individual Internet Service Provider, and any traffic flow between the access providers will be between users of the content provider's central portal.

In the illustrated example, reference has been made to the employment of Cisco routers. While it should be appreciated that the present concept can employ any router running appropriate IOS software and which can support ethernet interfaces, Cisco routers in the 3600, 7200, 7500 and 12000 model series with 100Mb/s and 1Gb/s ethernet interfaces are considered most appropriate for this invention.

As will therefore be appreciated, the present invention advantageously employs VLAN technology in a manner that serves to enhance the security, confidentially and robustness of the network connection when one party requires connection to at least two further, and separate parties. Such advantages are achieved in a particularly cost-effective manner.

## Claims

1. Communications network configuration for the connection of at least three parties wherein second and third parties are both connected to a first party in a manner wherein connection between the second and third parties is prevented, the network comprising a virtual local area network, the first and second parties defining at least part of a first virtual local area network, and the first and third parties defining at least part of a second separate virtual local area network, wherein the first party includes a router interface common to both the first and the second virtual local area networks and configured as a plurality of sub-interfaces.

2. A network as claimed in Claim 1, and comprising a broadcast-based ethernet structure.

3. A network as claimed in Claim 1 or 2, wherein the said at least three parties are connected across a Metropolitan Area Network.

4. A network as claimed in Claim 1, 2 or 3, wherein the sub-interfaces provide the physical common interface with the topology of a plurality of logical interfaces.

5. A network as claimed in Claim 1, 2, 3 or 4, wherein each of the plurality of parties includes a router interface configured to be common to a plurality of virtual local area networks.

6. A router interface arranged for use at a first of a plurality of first, second and third parties to be connected by way of a network forming at least part of a VLAN, the interface being configured as a plurality of logical sub-interfaces to allow connection of the said first party to the second and third parties such that connection between the said second and third parties is prevented.

7. A network connection configuration arranged for the access of a plurality of services through a single port at a party to the network, wherein the said party is provided with a router interface configured as a plurality of logical sub-interfaces to provide connectivity respectively to the plurality of services, the connection to each service being by way of discrete Virtual Local Area Networks.
